# EUROPÄISCHE PATENTANMELDUNG

(11) **EP 1 170 914 A2**
(43) Veröffentlichungstag der Anmeldung: **09.01.2002**
(21) Anmeldenummer: 01115647.8
(22) Anmeldetag: 03.07.2001
(51) Int. Cl.: H04L 25/49

(54) **Verfahren und Vorrichtung zur digitalen Codierung binärer Daten mit einem bestimmten Sendesignalspektrum**

(30) Priorität: 07.07.2000 DE 10033130
(71) Anmelder: Infineon Technologies AG, 81669 München (DE)
(72) Erfinder: von Wendorff, Wilhard, 81241 München (DE)
(74) Vertreter: Reinhard - Skuhra - Weise & Partner

(57) **Zusammenfassung**

Codiervorrichtung zur Codierung binärer Daten mit einem bestimmten Sendesignalspektrum, wobei die Codiervorrichtung (1) eine Datenstrom-Zerlegeeinrichtung (3) zum Zerlegen eines aus den zu codierenden binären Daten bestehenden Datenstroms in Datenblöcke DB mit vorgegebener Datenblocklänge, eine Berechnungseinrichtung (15) zur Berechnung der Differenz zwischen der Anzahl von binären Daten, die einen ersten binären Zustand aufweisen, und der Anzahl von binären Daten, die einen zweiten binären Zustand aufweisen, für jeden Datenblock DB und eine Sendeeinrichtung (27) aufweist zum Senden jedes Datenblocks als transformierten Datenblock oder als nicht transformierten Datenblock DB über einen an die Sendeeinrichtung (27) angeschlossenen Kommunikationskanal (K) derart, daß die Gesamtfolge der durch die Sendeeinrichtung (27) gesendeten Datenblöcke auf dem Kommunikationskanal (K) das bestimmte Sendesignalspektrum aufweist.

## Beschreibung

Die Erfindung betrifft ein Verfahren und eine Vorrichtung zur digitalen Codierung binärer Daten mit einem bestimmten vorgegebenen Sendesignalspektrum auf einem Kommunikationskanal, insbesondere einem seriellen Datenbus.

Der Datendurchsatz bzw. die Datenübertragungsgeschwindigkeiten auf gemultiplexten Kommunikationsbussen werden zunehmend höher. Demgegenüber hat die Qualität der benutzten Kommunikationskanäle, beispielsweise der Datenleitungen eines Kommunikationsbusses, nicht wesentlich zugenommen. Aufgrund der hohen Übertragungsgeschwindigkeiten kommt es auf den Datenleitungen zu einer elektromagnetischen Abstrahlung, so daß die elektromagnetische Verträglichkeit EMV abnimmt. Um eine hohe elektromagnetische Verträglichkeit EMV zu erreichen, werden daher die von einer Sendeeinrichtung über den Kommunikationskanal gesendeten Daten codiert. Als Codierverfahren wird dabei hauptsächlich das NRZ-Codierverfahren (NRZ: Non-returnto-zero) eingesetzt.

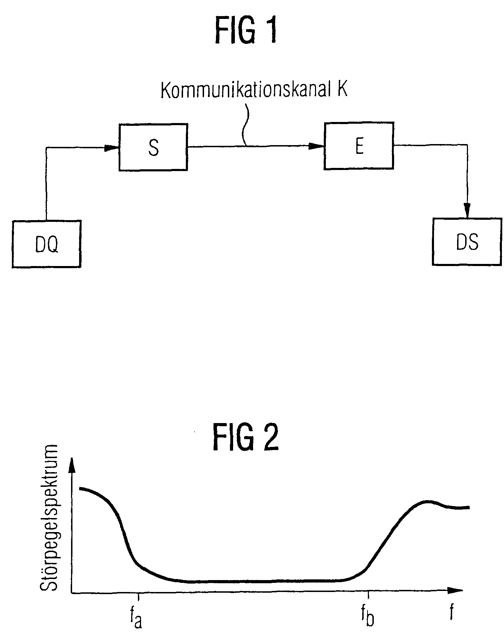

Fig. 1 zeigt schematisch die Übertragung von Daten von einer Datenquelle DQ zu einer Datensenke DS über einen Kommunikationskanal K. Bei dem Kommunikationskanal K handelt es sich beispielsweise um eine Datenbusleitung eines seriellen Datenbusses, an dem mehrere Steuergeräte angeschlossen sind, die über Sendeeinrichtungen S bzw. Empfangseinrichtungen E Daten senden bzw. empfangen. Bei dem Kommunikationskanal K kann es sich auch alternativ um eine drahtlose Übertragungsstrecke handeln, wie sie beim Mobilfunk eingesetzt wird.

Fig. 2 zeigt ein typisches Störsignalspektrum eines Kommunikationskanals K. In einem niedrigen Frequenzbereich von 0 Hz bis zu einer ersten Frequenz fₐ ist das durch Störsignale hervorgerufene Störsignalspektrum relativ hochpegelig. Die in diesem Bereich auftretenden Störsignale werden hauptsächlich durch schlechte Massekontakte zwischen den Steuergeräten und dem Kommunikationskanal bzw. der Datenübertragungsleitung hervorgerufen. In einem mittleren Frequenzbereich, der von der ersten Frequenz fₐ bis zu einer zweiten Frequenz f_{b} reicht, sind die Pegel der auftretenden Störsignale relativ gering. Ab einer oberen Grenzfrequenz f_{b} steigen die Pegel der Störsignale erheblich an. Dies wird beispielsweise innerhalb eines Fahrzeugsystembusses durch hochfrequente Zündstörsignale bewirkt.

Das NRZ-Codierverfahren führt in der Sendeeinrichtung S eine Datenbitcodierung derart durch, daß die Anzahl der auftretenden Signalflanken des codierten Signals minimal ist. Hierdurch wird erreicht, daß das in dem Kommunikationskanal K übertragene codierte Signal unterhalb der oberen Grenzfrequenz f_{b} liegt, so daß keine Störungen durch hochfrequente Störsignale das übertragene codierte Signal verfälschen. Der Nachteil des NRZ-Codierverfahrens besteht jedoch darin, daß eine lange Folge von gleichbleibenden Datenbits, beispielsweise eine lange, von der Datenquelle abgegebene Folge von Datenbits, die alle einen logischen hohen Zustand H aufweisen, mit einem codierten Sendesignal über den Kommunikationskanal übertragen wird, das einen sehr hohen Gleichstromsignalanteil besitzt. Die Frequenz des übertragenen codierten Signals liegt daher unterhalb der unteren Grenzfrequenz fₐ und ist daher einem hochpegeligen Störsignalspektrum ausgesetzt.

Es wurde daher ein sogenanntes Manchester-Codierverfahren vorgeschlagen, bei dem eine von der Datenquelle DQ abgegebene logische 0 durch die Sendeeinrichtung S als ein Sendesignal 01 abgegeben wird, und bei der jede von der Datenquelle DQ abgegebene logische 1 als codiertes Sendesignal 10 von der Sendeeinrichtung S an die Empfangseinrichtung E übertragen wird. Das Manchester-Codierverfahren weist zwar den Vorteil auf, daß das über den Kommunikationskanal gesendete Signal keinen Gleichstromanteil mehr aufweist, jedoch besteht ein erheblicher Nachteil darin, daß das über den Kommunikationskanal K übertragene codierte Signal einen sehr hohen Frequenzsignalanteil besitzt. Beispielsweise wird bei dem Manchester-Codierverfahren eine gleichbleibende Folge von logischen Nullen, die von der Datenquelle DQ abgegeben werden, über den Kommunikationskanal K als eine alternierende Folge von Nullen und Einsen übertragen, so daß das übertragene codierte Signal eine sehr hohe Frequenz besitzt. Die hochfrequenten Signalanteile des Manchester-codierten Übertragungssignals werden durch die hochfrequenten Störsignale, deren Frequenz oberhalb der oberen Grenzfrequenz f_{b} liegen, gestört, so daß es zu Datenübertragungsfehlern kommen kann.

Es ist daher die Aufgabe der vorliegenden Erfindung, ein Verfahren und eine Vorrichtung zu digitalen Codierung von binären Daten zu schaffen, bei dem das Sendesignalspektrum des codierten Sendesignals in einem Frequenzbereich mit minimalem Störsignalpegel liegt.

Diese Aufgabe wird erfindungsgemäß durch ein Verfahren mit dem in Patentanspruch 1 angegebenen Merkmalen sowie durch eine Codiervorrichtung mit den im Patentanspruch 7 angegebenen Merkmalen gelöst.

Die Erfindung schafft ein Verfahren zur digitalen Codierung binärer Daten mit einem bestimmten Sendesignalspektrum, wobei das Verfahren die folgenden Schritte aufweist, nämlich Zerlegen eines aus dem zu codierenden binären Daten bestehenden digitalen Datenstroms in Datenblöcke mit vorgegebener Datenblocklänge,
Bestimmen einer Differenz zwischen der Anzahl von binären Daten, die einen ersten Binärzustand aufweisen, und der Anzahl von binären Daten, die einen zweiten Binärzustand aufweisen, für jeden Datenblock,
Senden eines jeden Datenblockes als negierter Datenblock oder als nicht-negierter Datenblock über einen Kommunikationskanal derart, daß die Gesamtfolge der gesendeten Datenblöcke auf dem Kommunikationskanal ein bestimmtes Sendesignalspektrum aufweist.

Bei dem erfindungsgemäßen Verfahren wird vorzugsweise jedem gesendeten Datenblock mindestens ein Anzeigedatum hinzugefügt, das angibt, ob der gesendete Datenblock negiert oder nicht negiert gesendet wird.

Bei einer besonders bevorzugten Ausführungsform des erfindungsgemäßen Verfahrens werden die binären Daten NRZ-codiert gesendet.

Die bei dem erfindungsgemäßen Verfahren gesendeten Datenblöcke weisen vorzugsweise jeweils die gleiche Datenblocklänge auf.

Bei einer bevorzugten Ausführungsform des erfindungsgemäßen Verfahrens weist das bestimmte Sendesignalspektrum einen minimalen Gleichstromanteil auf.

Das Sendesignalspektrum weist vorzugsweise zusätzlich einen minimalen Hochfrequenzsignalanteil auf.

Die Erfindung schafft ferner eine Codiervorrichtung zur Codierung binärer Daten mit einem bestimmten Sendesignalspektrum, wobei die Codiervorrichtung
eine Datenzerlegeeinrichtung zum Zerlegen eines aus den zu codierenden binären Daten bestehenden Datenstroms in Datenblöcke mit vorgegebener Datenblocklänge,
eine Berechnungseinrichtung zur Berechnung der Differenz zwischen der Anzahl von binären Daten, die einen ersten binären Zustand aufweisen, und der Anzahl von binären Daten, die einen zweiten binären Zustand aufweisen, für jeden Datenblock,
wobei die Codiervorrichtung ferner eine Sendeeinrichtung besitzt zum Senden jedes Datenblocks als datenmäßig transformierter oder nichttransformierter Datenblock über einen an die Sendeeinrichtung angeschlossenen Kommunikationskanal, derart, daß die Gesamtfolge der durch die Sendeeinrichtung gesendeten Datenblöcke auf dem Kommunikationskanal das bestimmte Sendesignalspektrum aufweist.

Der Kommunikationskanal ist vorzugsweise entweder eine Datenübertragungsleitung oder eine drahtlose Übertragungssignalstrecke.

Im weiteren werden bevorzugte Ausführungsformen des erfindungsgemäßen Codierverfahrens sowie der erfindungsgemäßen Codiervorrichtung unter Bezugnahme auf die beigefügten Figuren zur Erläuterung erfindungswesentlicher Merkmale beschrieben.

Es zeigen:

Fig. 1 eine Datenübertragungsstrecke zur Übertragung codierter Signale nach dem Stand der Technik;

Fig. 2 ein Störsignalspektrum eines Kommunikationskanals zur Erläuterung der der Erfindung zugrundeliegenden Problematik;

Fig. 3 eine bevorzugte Ausführungsform der erfindungsgemäßen Codiervorrichtung zur Codierung binärer Daten mit einem bestimmten Sendesignalspektrum;

Fig. 4 ein Flußdiagramm einer bevorzugten Ausführungsform des erfindungsgemäßen Verfahrens zur digitalen Codierung binärer Daten mit einem bestimmten Sendesignalspektrum;

Fig. 5 eine zu der erfindungsgemäßen Codiervorrichtung zugehörige entsprechende Decodiervorrichtung gemäß der Erfindung;

Fig. 6 ein Flußdiagramm zur Darstellung der Decodierung der gemäß dem erfindungsgemäßen Codierverfahren codierten übertragenen Sendedaten.

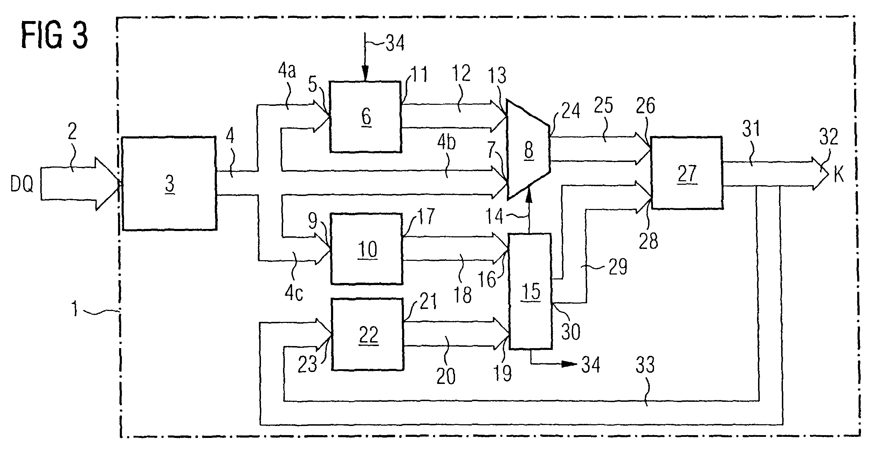

Fig. 3 zeigt eine bevorzugte Ausführungsform der erfindungsgemäßen Codiervorrichtung 1 zur Codierung binärer Daten, die von einer Datenquelle DQ über Datenleitungen 2 seriell oder parallel an eine Datenzerlegeeinrichtung 3 der Codiervorrichtung 1 abgegeben werden. Die Datenzerlegeeinrichtung 3 zum Zerlegen des an den Datenleitungen 2 anliegenden Datenstroms der aus den zu codierenden binären Daten besteht, zerlegt die anliegenden binären Daten in Datenblöcke DB mit vorgegebener Datenblocklänge. Die derart gebildeten Datenblöcke werden über interne Datenleitungen 4 an einen Dateneingang 5 einer Rechenoperationseinrichtung 6 an einen ersten Dateneingang 7 eines Multiplexers 8 und an einen Dateneingang 9 einer Zähleinrichtung 10 angelegt.

Der Signalausgang 11 der Transformationseinrichtung bzw. Rechenoperationseinrichtung 6 liegt über Datenleitungen 12 an einem zweiten Eingang 13 des Multiplexers 8 an. Der Multiplexer 8 wird über eine Auswahlsteuerleitung 14 durch ein Steuerwerk 15 angesteuert. Das Steuerwerk 15 weist einen ersten Zählersignaleingang 16 zum Empfang eines von der Zählereinrichtung 10 über einen Datenausgang 17 und über Datenleitungen 18 übertragenen ersten Zählsignals auf. Das Steuerwerk 15 besitzt ferner einen zweiten Zählersignaleingang 19, der über Datenleitungen 20 an einen Datenausgang 21 einer zweiten Zähleinrichtung 22 angeschlossen ist. Die Zähleinrichtung 22 besitzt einen Dateneingang 23.

Der Ausgang 24 des Multiplexers 8 liegt über Datenleitungen 25 an einem ersten Eingang 26 einer Sendeeinrichtung 27 an. Die Sendeeinrichtung 27 weist einen zweiten Dateneingang 28 zur Aufnahme der über Datenleitungen 29 von dem Steuerwerk über zugehörige Datenausgänge 30 abgegebenen Anzeigedaten. Die Sendeeinrichtung 27 gibt ein codiertes Sendesignal über Signalleitungen 31 an einen Signalausgang 32 der Codiervorrichtung 1 aus, wobei der Signalausgang 32 an den Kommunikationskanal K angeschlossen ist. Die Sendesignalleitungen 31 sind über Leitungen 33 an den Dateneingang 23 der zweiten Zähleinrichtung 22 rückgekoppelt.

Die von der Datenquelle DQ abgegebenen zu codierenden Daten sind binäre Daten, d.h. sie weisen einen ersten binären Zustand und einen zweiten binären Zustand auf. Durch die Datenstrom-Zerlegeeinrichtung 3 wird der Datenstrom in Datenblöcke vorbestimmter Datenblocklänge zerlegt. Dabei ist die Datenblocklänge vorzugsweise einstellbar. Die Datenblöcke werden über die Datenleitungen 4 der Transformations- bzw. Rechenoperationseinrichtung 6 zugeführt, die vorzugsweise durch das Steuerwerk 15 über eine Steuerleitung 34 angesteuert wird. Die Rechenoperationseinrichtung 6 führt eine Rechenoperation bzw. logische Transformation für jeden Datenblock durch. Die Datentransformation besteht vorzugsweise darin, daß die Datenblöcke jeweils negiert werden, d.h. die in den Datenblocks enthaltenen Datenbits werden invertiert.

Mittels der Zähleinrichtungen 10, 22 wird die Differenz zwischen der Anzahl von binären Daten, die einen ersten binären Zustand aufweisen, und von binären Daten, die einen zweiten Binärzustand aufweisen, für jeden durch die Datenstrom-Zerlegeeinrichtung 3 gebildeten Datenblock DB bestimmt. Für jeden gebildeten Datenblock DB wird die binäre Zustandsverteilung bestimmt. Dabei wird eine erste binäre Zustandsverteilung A aller gesendeten bzw. codierten Datenblöcke ohne den letzten zu codierenden Datenblock aufakkumuliert und eine zweite binäre Zustandsverteilung B aller gesendeten bzw. codierten Datenblöcke einschließlich des letzten zu codierenden Datenblocks DB aufakkumuliert.

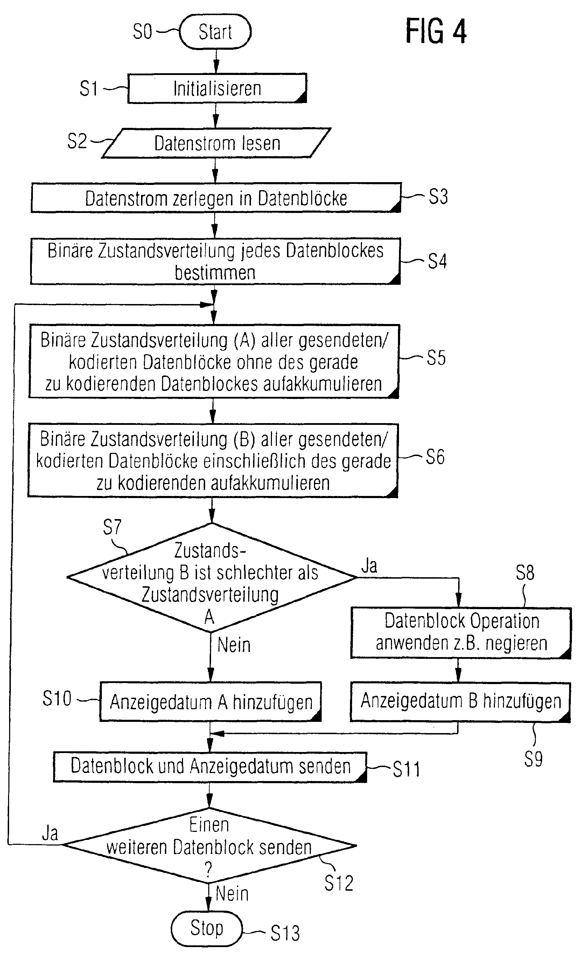

Fig. 4 zeigt ein Ablaufdiagramm des durch die in Fig. 3 dargestellte Codiervorrichtung 1 durchgeführten Codierverfahrens.

Nach einem Startschritt S0 wird die Codiervorrichtung 1 initialisiert, wobei insbesondere die Zähleinrichtungen 10, 22 zurückgesetzt werden.

In einem Schritt S2 wird der an den Datenleitungen 2 anliegende zu codierende Datenstrom in einen Datenpuffer der Datenstrom-Zerlegeeinrichtung 3 seriell bzw. parallel eingelesen.

In einem Schritt S3 zerlegt die Datenstrom-Zerlegeeinrichtung 3 den eingelesenen Datenstrom in Datenblöcke mit vorgegebener Datenblocklänge. Jeder Datenblock weist dabei eine vorgegebene Anzahl von Datenbits auf.

In einem Schritt S4 wird für jeden gebildeten Datenblock die binäre Zustandsverteilung bestimmt, d.h. es wird die Anzahl derjenigen Datenbits festgestellt, die sich in einem ersten binären Zustand befinden, und die Anzahl der binären Datenbits, die sich in einem zweiten binären Zustand befinden.

In einem Schritt S5 wird eine erste binäre Zustandsverteilung A aller gesendeten bzw. codierten Datenblöcke ohne den letzten zu codierenden Datenblock DB aufakkumuliert. Diese binäre Zustandsverteilung A gibt für die Gesamtfolge aller bereits über den Kommunikationskanal K gesendeten codierten Datenblöcke an, ob mehr Datenbits in einem ersten logischen Zustand, beispielsweise einem logisch hohen Zustand H, oder mehr Datenbits in einem logisch niedrigen Zustand L über den Kommunikationskanal K durch die Codiervorrichtung 1 übertragen worden sind. Im Schritt S5 werden jedoch nicht die Datenbits des letzten zu codierenden Datenblocks DB berücksichtigt.

In einem Schritt S6 wird eine zweite binäre Zustandsverteilung B aller gesendeten codierten Datenblöcke DB einschließlich des gerade zu codierenden bzw. letzten Datenblocks aufakkumuliert.

Das Steuerwerk 15 vergleicht in einem Schritt S7, ob die zweite Zustandsverteilung B, d.h. einschließlich des letzten zu codierenden Datenblocks DB schlechter ist als die erste Zustandsverteilung A, d.h. ohne den letzten zu codierenden Datenblock. Dabei ist die Zustandsverteilung um so schlechter, je mehr das Sendesignalspektrum von dem gewünschten vorgegebenen Sendesignalspektrum abweicht.

Falls im Schritt S7 festgestellt wird, daß die zweite binäre Zustandsverteilung B der Gesamtfolge der gesendeten codierten Datenblöcke einschließlich des gerade zu codierenden Datenblocks schlechter ist als die erste Zustandsverteilung A ohne den gerade zu codierenden Datenblock DB, steuert im Schritt S8 das Steuerwerk 15 über die Steuerleitung 34 die Rechenoperationseinheit 6 zur Durchführung einer logischen Datentransformation an. Die Datentransformation besteht vorzugsweise darin, daß die Datenbits des gerade zu codierenden Datenblocks DB einzeln negiert bzw. invertiert werden. Die Negation erfolgt dabei vorzugsweise durch einen Inverter, der beispielsweise ein XOR-Gatter enthält. Das Steuerwerk 15 steuert über die Auswahlleitung 14 den Multiplexer 8 derart an, daß der erste Multiplexereingang 13 an den Multiplexerausgang 24 durchgeschaltet wird, so daß der negierte letzte Datenblock DB an den Signaleingang 26 der Sendeeinrichtung 27 gelangt.

In einem Schritt S9 erzeugt das Steuerwerk 15 ein Anzeigedatum B, welches anzeigt, daß der Datenblock negiert gesendet wird. Dieses erzeugte Anzeigedatum wird von dem Steuerwerk 15 über den Ausgangs 30 und die Datenleitungen 29 an den Eingang 28 der Sendeeinrichtung 27 angelegt und als ein zusätzliches Bit bzw. Datum in den zu sendenden Datenblock DB eingefügt.

Wird im Schritt S7 festgestellt, daß die zweite Binärzustandsverteilung B besser ist als die erste binäre Zustandsverteilung A, wird dem Datenblock DB keine Datentransformation durchgeführt. Hierzu schaltet das Steuerwerk 15 den Multiplexer 8 über die Auswahlleitung derart, daß der Multiplexereingang 7 an den Multiplexerausgang 24 durchgeschaltet wird. In einem Schritt S10 wird dem Datenblock ein Anzeigedatum A hinzugefügt, welches angibt, daß der Datenblock nicht negiert ist.

In einem Schritt S11 wird durch die Sendeeinrichtung 27 der am Eingang 26 anliegende transformierte oder nichttransformierte Datenblock einschließlich des eingefügten Anzeigedatums A, B mit einem NRZ-Codierverfahren codiert und über die Datenleitung 31 an den Ausgang 32 des Codiervorrichtung 1 abgegeben.

In einem Schritt S12 wird durch das Steuerwerk 15 festgestellt, ob ein weiterer Datenblock zu senden ist oder nicht. Falls ein weiterer Datenblock DB gesendet werden soll, kehrt das Verfahren zu Schritt S5 zurück. Falls kein weiterer Datenblock zu senden ist, wird im Schritt S13 das Codierverfahren beendet.

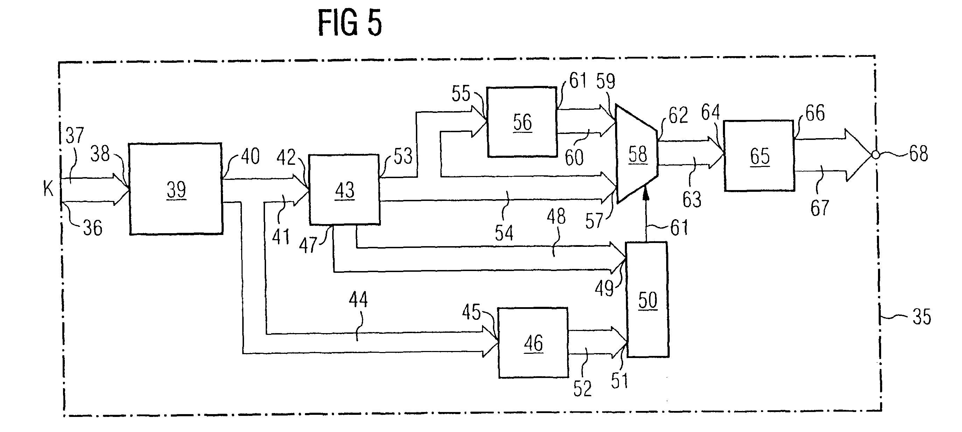

Fig. 5 zeigt in einem Blockschaltbild eine Datendecodierungsvorrichtung 35 zur Decodierung von Sendedaten, die gemäß dem erfindungsgemäßen Codierverfahren codiert worden sind. Die Decodiervorrichtung 35 besitzt einen Dateneingang 36, der an den Kommunikationskanal K angeschlossen ist. Der Dateneingang 36 ist über Datenleitungen 37 mit einem Signaleingang 38 einer Datenempfangseinrichtung 39 verbunden. Die Datenempfangseinrichtung 39 empfängt die übertragenen codierten Datenblöcke, die in der Empfangseinrichtung 39 zwischengespeichert werden. Ausgangsseitig ist die Empfangseinrichtung 39 über einen Signalausgang 40 und Datenleitungen 41 mit einem Eingang 42 eines Datenfilters 43 zum Ausfiltern des in dem empfangenen Datenblock enthaltenen Anzeigedatums verbunden. Ferner ist der Ausgang 40 der Empfangseinrichtung 39 über Datenleitungen 44 mit dem Dateneingang 45 einer Zähleinrichtung 46 verbunden. In der Zähleinrichtung 46 wird die binäre Zustandsverteilung aller empfangenen Datenblöcke aufakkumuliert. Die Filtereinrichtung 43 dient zur Ausfilterung des Anzeigedatums. Das durch die Filtereinrichtung 43 ausgefilterte Anzeigedatum wird von der Filtereinrichtung 43 über einen Datenausgang 47 und Datenleitungen 48 an einen Anzeigedatum-Empfangseingang 49 eines in der Decodiervorrichtung 35 enthaltenen Steuerwerks 50 angelegt. Das Steuerwerk 50 weist einen zweiten Eingang 51 auf, über den es mittels Datenleitungen 52 an einen Ausgang der Zähleinrichtung 46 angeschlossen ist.

Die Filtereinrichtung 43 weist einen Datenausgang 53 auf, über den die Filtereinrichtung 43 gefilterte Datenblöcke an Datenleitungen 54 abgibt. Die an den Datenleitungen 54 anliegenden gefilterten Datenblöcke enthalten kein Anzeigedatum mehr. Die Datenleitungen 54 liegen einerseits an einem Eingang 55 einer Transformationseinrichtung 56 und an einem Eingang 57 eines Multiplexers 58 an. Der Multiplexer 58 besitzt einen zweiten Multiplexereingang 59, der über Datenleitungen 60 mit einem Ausgang 61 der Rechenoperationseinheit 56 verbunden ist. Der Multiplexer 58 wird über eine Steuerleitung bzw. Auswahlleitung 61 durch das Steuerwerk 50 gesteuert. Der Multiplexer 58 weist ferner einen Multiplexerausgang 62 auf, der über Multiplexer-Ausgangsleitungen 63 mit einem Dateneingang 64 einer Datenstrom-Integrationseinrichtung 65 verbunden ist. Die Datenstrom-Integrationseinrichtung 65 gibt über einen Datenausgang 66 die decodierten binären Daten über Datenleitungen 67 an einen Ausgang 68 der Decodiervorrichtung 35 ab. An den Datenausgang 68 der Decodiervorrichtung 35 ist eine beliebige Datensenke zum Empfang der binären Daten zur weiteren Datenverarbeitung anschließbar.

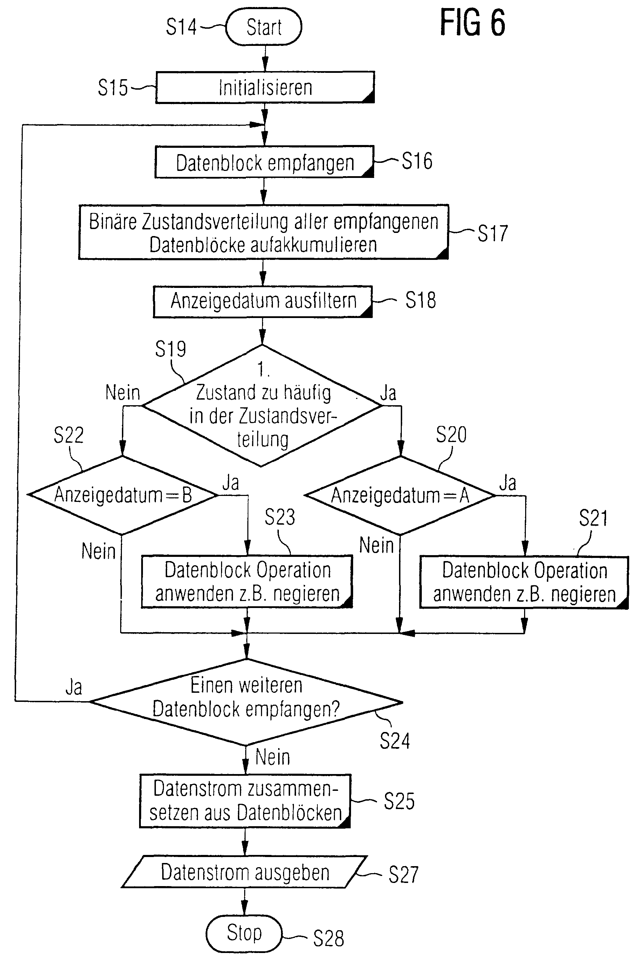

Fig. 6 zeigt den in der Decodiervorrichtung 35 ablaufenden Decodiervorgang im Detail. Nach einem Startschritt S14 wird die Decodiervorrichtung 35 in einem Initialisierungsschritt S15 initialisiert, wobei insbesondere die Zähleinrichtung 46 zurückgesetzt wird.

In einem Schritt S16 wird durch die Empfangseinrichtung 39 ein anliegender Datenblock empfangen und eingelesen. In einem Schritt S17 wird die binäre Zustandsverteilung aller empfangenen Datenblöcke durch die Zähleinrichtung 46 aufakkumuliert. In einem Schritt S18 wird durch die Filtereinrichtung 43 das in dem empfangenen Datenblock enthaltene Anzeigedatum ausgefiltert und über die Anzeigedatumsleitungen 48 das ausgefilterte Anzeigedatum an den Eingang 49 des Steuerwerks 50 angelegt. Durch das Steuerwerk 50 wird in einem Schritt S19 entschieden, ob ein erster binärer Zustand zu häufig in der binären Zustandsverteilung aller empfangenen Datenblöcke vorhanden ist oder nicht. Falls ein erster binärer Zustand zu häufig in der binären Zustandsverteilung auftritt, wird im Schritt S20 durch das Steuerwerk 50 bestimmt, ob das an dem Eingang 49 anliegende Anzeigedatum das Anzeigedatum A ist, das im Schritt S10 hinzugefügt wurde. Falls das Anzeigedatum das Anzeigedatum A ist, wird im Schritt S21 eine Datentransformation bzw. eine Rechenoperation durch die Transformationseinrichtung 56 an dem am Eingang 55 anliegenden gefilterten Datenblock angewendet. Diese Datentransformation besteht vorzugsweise darin, daß der anliegende gefilterte Datenblock durch die Rechenoperationseinrichtung 56 negiert wird.

Falls im Schritt S19 durch das Steuerwerk 50 festgestellt wird, daß ein erster binärer Zustand nicht so häufig in der aufakkumulierten binären Zustandsverteilung aller empfangenen Datenblöcke vorkommt, wird in einem Schritt S22 geprüft, ob das durch die Filtereinrichtung 43 ausgefilterte Anzeigedatum das Anzeigedatum B ist, welches in Schritt S9 hinzugefügt wurde. Falls das Anzeigedatum das Anzeigedatum B ist, wird in einem Schritt S23 durch die Transformationseinrichtung 56 eine Datentransformation durchgeführt, indem beispielsweise der gefilterte Datenblock negiert wird. Hierzu steuert das Steuerwerk 50 den Multiplexer 58 über die Steuerleitung 61 derart an, daß der Ausgang 61 der Transformationseinrichtung 56 an den Multiplexerausgang 62 des Multiplexers 58 durchgeschaltet wird. Falls im Schritt S22 festgestellt wird, daß das Anzeigedatum nicht das Anzeigedatum B ist, steuert das Steuerwerk 50 den Multiplexer 58 derart an, daß der erste Multiplexereingang 57 an den Multiplexerausgang 62 durchgeschaltet wird.

In einem Schritt S24 wird geprüft, ob ein weiterer Datenblock die Empfangseinrichtung 39 der Decodiervorrichtung 35 empfangen worden ist oder nicht. Falls ein weiterer Datenblock empfangen worden ist, kehrt das Verfahren zum Schritt S16 zurück. Falls kein weiterer Datenblock empfangen worden ist, wird im Schritt S25 durch die Datenstrom-Integrationseinrichtung 65 der Datenstrom aus den über den Multiplexer 58 durchgeschalteten Datenblöcken zusammengesetzt. Im Schritt S26 wird der zusammengesetzte Datenstrom durch die Decodiervorrichtung 35 am Datenausgang 68 ausgegeben. Im Schritt S28 wird das Decodierverfahren beendet.

Durch das erfindungsgemäße Codierverfahren und das zugehörige Decodierverfahren ist es möglich, einen beliebigen, von einer Datenquelle DQ abgegebenen Datenstrom aus binären Daten derart zu codieren, daß die codierten Sendedaten ein bestimmtes Sendesignalspektrum aufweisen. Beispielsweise können die zu codierenden binären Daten derart codiert werden, daß ihr Sendesignalspektrum in dem Frequenzband zwischen der Frequenz fₐ und der Frequenz f_{b} in Fig. 2 liegt. In diesem Frequenzbereich ist das Störpegelspektrum minimal, so daß die über den Kommunikationskanal K gesendeten, gemäß dem erfindungsgemäßen Verfahren codierten Daten nur minimalen Störsignalen ausgesetzt sind. Hierdurch wird die Wahrscheinlichkeit für das Auftreten von Fehlern bei der Datenübertragung minimiert. Das vorgegebene Sendesignalspektrum, das durch das erfindungsgemäße Codierverfahren erreicht wird, kann ein beliebiges vorgegebenes Sendesignalspektrum sein. Beispielsweise kann es sich bei dem vorgegebenen Sendesignalspektrum um ein Sendesignalspektrum mit einem minimalen Gleichstromanteil handeln oder um ein Sendesignalspektrum mit einem minimalen Hochfrequenzsignalanteil.

Das erfindungsgemäße Codierverfahren eignet sich insbesondere bei Kommunikationskanälen K, die in bestimmten Frequenzbereichen sehr hohen Störsignalpegeln ausgesetzt sind, insbesondere bei Busleitungen innerhalb von Fahrzeugsteuerungen sowie bei drahtlosen Kommunikationskanälen, wie sie im Mobilfunk eingesetzt werden.

### Bezugszeichenliste

- 1: Codiervorrichtung
- 2: Datenleitungen
- 3: Datenstrom-Zerlegeeinrichtung
- 4: Datenleitungen
- 5: Dateneingang
- 6: Rechenoperationseinheit
- 7: Multiplexereingang
- 8: Multiplexer
- 9: Dateneingang
- 10: Zähleinrichtung
- 11: Datenausgang
- 12: Datenleitungen
- 13: Multiplexereingang
- 14: Auswahlsteuerleitung
- 15: Steuerwerk
- 16: Dateneingang
- 17: Zählerausgang
- 18: Datenleitungen
- 19: Dateneingang
- 20: Datenleitungen
- 21: Zählerausgang
- 22: Zähleinrichtung
- 23: Zählersignaleingang
- 24: Multiplexerausgang
- 25: Multiplexer-Ausgangsleitungen
- 26: Dateneingang
- 27: Sendeeinrichtung
- 28: Dateneingang
- 29: Datenleitungen
- 30: Datenausgang
- 31: Signalleitungen
- 32: Datenausgang
- 33: Datenleitungen
- 34: Steuerleitung
- 35: Decodiervorrichtung
- 36: Signaleingang
- 37: Leitungen
- 38: Dateneingang
- 39: Empfangseinrichtung
- 40: Datenausgang
- 41: Datenleitungen
- 42: Dateneingang
- 43: Filtereinrichtung
- 44: Datenleitungen
- 45: Dateneingang
- 46: Zähleinrichtung
- 47: Datenausgang
- 48: Anzeigedatum-Übertragungsleitungen
- 49: Dateneingang
- 50: Steuerwerk
- 51: Dateneingang
- 52: Datenleitungen
- 53: Datenausgang
- 54: Datenleitungen
- 55: Dateneingang
- 56: Rechenoperationseinheit
- 57: Multiplexereingang
- 58: Multiplexer
- 59: Multiplexereingang
- 60: Datenleitung
- 61: Datenausgang
- 62: Multiplexerausgang
- 63: Multiplexer-Ausgangsleitungen
- 64: Dateneingang
- 65: Datenstrom-Integrationseinrichtung
- 66: Datenausgang
- 67: Datenausgangsleitungen
- 68: Datenausgang

## Patentansprüche

1. Verfahren zur digitalen Codierung binärer Daten mit einem bestimmten Sendesignalspektrum, wobei das Verfahren die folgenden Schritte aufweist:
(a) Zerlegen eines aus den zu codierenden binären Daten bestehenden digitalen Datenstroms in Datenblöcke DB mit vorgegebener Datenblocklänge,
(b) Bestimmen einer Differenz zwischen der Anzahl von binären Daten, die einen ersten Binärzustand aufweisen, und der Anzahl von binären Daten, die einen zweiten Binärzustand aufweisen, für jeden Datenblock DB;
(c) Senden jedes Datenblocks als transformierten Datenblock oder als nicht transformierten Datenblock über einen Kommunikationskanal K derart, daß die Gesamtfolge der gesendeten Datenblöcke auf den Kommunikationskanal K das bestimmte Sendesignalspektrum aufweist.

2. Verfahren nach Anspruch 1,
**dadurch gekennzeichnet,**
**daß** der transformierte Datenblock ein bitweise negierter Datenblock ist.

3. Verfahren nach Anspruch 1 oder 2,
**dadurch gekennzeichnet,**
**daß** jedem gesendeten Datenblock mindestens ein Anzeigedatum hinzugefügt wird, das angibt, ob der gesendete Datenblock transformiert worden ist oder nicht.

4. Verfahren nach einem der vorangehenden Ansprüche,
**dadurch gekennzeichnet,**
**daß** die binären Daten mittels NRZ-Verfahren codiert werden.

5. Verfahren nach einem der vorangehenden Ansprüche,
**dadurch gekennzeichnet,**
**daß** die Datenblöcke jeweils die gleiche Datenblocklänge aufweisen.

6. Verfahren nach einem der vorangehenden Ansprüche,
**dadurch gekennzeichnet,**
**daß** das bestimmte Sendesignalspektrum einen minimalen Gleichstromanteil aufweist.

7. Verfahren nach einem der vorangehenden Ansprüche,
**dadurch gekennzeichnet,**
**daß** das Sendesignalspektrum einen minimalen Hochfrequenzsignalanteil aufweist.

8. Codiervorrichtung zur Codierung binärer Daten mit einem bestimmten Sendesignalspektrum, wobei die Codiervorrichtung (1) aufweist:
(a) eine Datenstrom-Zerlegeeinrichtung (3) zum Zerlegen eines aus den zu codierenden binären Daten bestehenden Datenstroms in Datenblöcke DB mit vorgegebener Datenblocklänge;
(b) eine Berechnungseinrichtung (15) zur Berechnung der Differenz zwischen der Anzahl von binären Daten, die einen ersten binären Zustand aufweisen, und der Anzahl von binären Daten, die einen zweiten binären Zustand aufweisen, für jeden Datenblock DB; und
(c) eine Sendeeinrichtung (27) zum Senden jedes Datenblocks DB als transformierten Datenblock oder als nicht transformierten Datenblock über einen an die Sendeeinrichtung (27) angeschlossenen Kommunikationskanal (K) derart, daß die Gesamtfolge der durch die Sendeeinrichtung (27) gesendeten Datenblöcke DB auf dem Kommunikationskanal (K) das bestimmte Sendesignalspektrum aufweist.

9. Codiervorrichtung nach Anspruch 8,
**dadurch gekennzeichnet,**
**daß** der Kommunikationskanal (K) eine Datenübertragungsleitung ist.

10. Codiervorrichtung nach Anspruch 8,
**dadurch gekennzeichnet,**
**daß** der Kommunikationskanal (K) eine drahtlose Übertragungsstrecke ist.
